# EUROPÄISCHE PATENTANMELDUNG

(11) **EP 0 677 417 A1**
(43) Veröffentlichungstag der Anmeldung: **18.10.1995**
(21) Anmeldenummer: 95102375.3
(22) Anmeldetag: 21.02.1995
(51) Int. Cl.: B60L 11/18, B60K 1/00

(54) **Anordnung eines Antriebsaggregats in einem Elektrofahrzeug**

(30) Priorität: 12.04.1994 DE 4412453
(71) Anmelder: DAIMLER-BENZ AKTIENGESELLSCHAFT, D-70567 Stuttgart (DE)
(72) Erfinder: Riemer, Bernd, Ing., D-70374 Stuttgart (DE); Klaiber, Thomas, Dipl. Ing., D-71384 Weinstadt (DE)

(57) **Zusammenfassung**

Die Erfindung betrifft eine Anordnung eines Antriebsaggregats in einem Fahrzeug, welches zumindest einen Elektrofahrmotor (13), eine Brennstoffzelle (15), einen Reformer (16) und einen Brennstofftank (17) aufweist. Erfindungsgemäß wird vorgeschlagen, die einzelnen Komponenten, insbesondere der Reformer (16) und das Brennstoffzellen-Stack (15) als separate Bauteile auszubilden und in unterschiedlichen Fahrzeugbereichen anzuordnen. Beispielsweise wird vorgeschlagen, den Reformer (16) im Heckteil und der Brennstoffzellen-Stack (15) im Front- oder Mittelteil des Fahrzeugs anzuordnen. Die Anordnung einzelner Komponenten des Brennstoffzellensystems im Unterflurbereich des Fahrzeugs bringt zusätzlich den Vorteil, daß der Fahrgast- beziehungsweise Laderaum ebenflächig ausbilden werden kann.

## Beschreibung

Die Erfindung betrifft eine Anordnung eines Antriebsaggregats in einem Elektrofahrzeug gemäß dem Oberbegriff des Hauptanspruchs.

Aus der US-PS 51 93 635 ist ein Fahrzeug, welches ein Brennstoffzellensystem und einen Elektrofahrmotor aufweist, bekannt. Bei dieser Anordnung ist das gesamte Brennstoffzellensystem, welches aus einem Reformer, dem Brennstoffzellen-Stack und zwei Kompressoren besteht, auf einem gemeinsamen Rahmen montiert und im Bereich des Fahrzeugschwerpunktes angeordnet.

Bei konventionellen Fahrzeugen besteht aber die Schwierigkeit, daß weder im Bereich des Fahrzeugschwerpunktes noch an anderen Stellen im Fahrzeug ausreichend Platz zur Verfügung steht, um ein solches komplettes Brennstoffzellensystem ohne Beeinträchtigung der Fahreigenschaften und ohne Einschränkung des Raumangebotes für die Insassen anzuordnen.

Die Aufgabe der Erfindung besteht darin, eine Anordnung für ein Antriebsaggregat in einem Fahrzeug zu schaffen, mit der ein Brennstoffzellensystern in einem konventionellen Fahrzeug unter Ausnützung des vorhandenen Bauraumes angeordnet werden kann.

Die Aufgabe wird erfindungsgemäß durch die kennzeichnenden Merkmale des Patentanspruchs 1 gelöst.

Durch die Ausbildung des Brennstoffzellen-Stacks und des Reformers als separate Bauteile ist es möglich, die einzelnen Komponenten des Brennstoffzellensystems auf unterschiedliche Bereiche des Fahrzeugs zu verteilen. Dadurch wird es möglich, kleinere vorhandene Bauräume auszunutzen. Außerdem wird es dadurch möglich, die Lage des Fahrzeugschwerpunktes positiv zu beeinflussen, ohne daß auch nur eine Komponente des Brennstoffzellensystems im Bereich des Schwerpunktes angeordnet werden muß. Dies ist deshalb besonders vorteilhaft, weil sich bei Kraftfahrzeugen der Schwerpunkt oftmals im Bereich des Fahrgastraumes befindet.

Die Anordnung der Teile des Brennstoffzellensystems im Unterflurbereich des Fahrzeugs weist den Vorteil auf, daß der Fahrgast- beziehungsweise Laderaum ebenflächig ausgebildet werden kann und daß sich ein besonders tiefliegender Schwerpunkt realisieren läßt.

Weitere Vorteile und Ausgestaltungen gehen aus den Unteransprüchen und der Beschreibung hervor. Die Erfindung ist nachstehend anhand einer Zeichnung näher beschrieben, wobei
- Fig. 1a: eine Prinzipdarstellung eines erfindungsgemäßen Aufbaus für ein Fahrzeug in einem vertikalen Längsschnitt,
- Fig. 1b: die Anordnung aus Fig. 1a in einem horizontalen Schnitt,
- Fig. 2a: ein zweites Ausführungsbeispiel einer erfindungsgemäßen Anordnung in einem vertikalen Längsschnitt,
- Fig. 2b: die Anordnung aus Fig. 2a in einem horizontalen Schnitt,
- Fig. 3: ein drittes Ausführungsbeispiel einer erfindungsgemäßen Anordnung in einem vertikalen Längsschnitt, und
- Fig. 3b: die Anordnung aus Fig. 3a in einem horizontalen Schnitt zeigt.

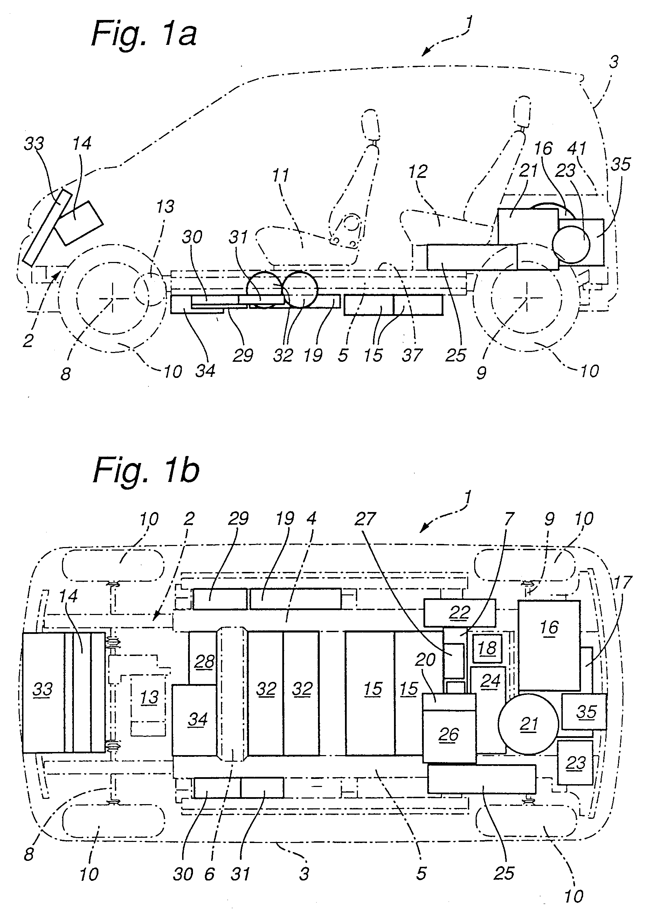

Das insgesamt mit 1 gekennzeichnete Fahrzeug aus Fig. 1 weist eine von einem Fahrzeugrahmen 2 getragene Karosserie 3 auf. Der Fahrzeugrahmen 2 umfaßt zwei Längsträger 4, 5 und zwei Querträger 6, 7. An den Längsträgern 4, 5 ist eine Vorderachse 8 und eine Hinterachse 9, an denen jeweils zwei Räder 10 angeordnet sind, angelenkt. Von dem Fahrzeugrahmen 2 werden außerdem zwei Vordersitze 11 und eine Rücksitzbank 12 gehalten. Zum Antrieb des Fahrzeugs ist an der Vorderachse ein Elektrofahrmotor 13, dessen Leistung mit Hilfe eines Stromstellers 14 beeinflußt werden kann, angeordnet. Die elektrische Energie für den Elektrofahrmotor 14 wird mit Hilfe eines Brennstoffzellensystems erzeugt. Das Brennstoffzellensystem besteht aus einem Brennstoffzellen-Stack 15, in dem eine Vielzahl von Einzelbrennstoffzellen integriert sind, einem Reformer 16, einem Brennstofftank 17 und einer Vielzahl von Zusatzaggregaten 18-35. Die Funktion des Brennstoffzellensystems, beispielsweise einer PEM-Brennstoffzelle mit Methanol-Reformer, ist allgemein bekannt und wird daher im folgenden nur noch kurz beschrieben.

Im Brennstofftank 17 gespeichertes Methanol und Wasser aus einem Wasserspeicher 18 werden in einem Verdampfer 19 in einen gasförmigen Zustand überführt und anschließend zum Reformer 16 geleitet. Im Reformer 16 wird dann aus dem Methanol/Wasserdampfgemisch unter Zufuhr von Wärme mit Hilfe eines katalytischen Brenners 20 im wesentlichen Wasserstoff, Kohlendioxid und Kohlenmonoxid gebildet. Zur Reduzierung des Kohlenmonoxidanteils kann zusätzlich ein CO-Oxidator 21 vorgesehen werden. Dieses H₂-haltige Brenngas wird anschließend mit Hilfe eines H₂-Kompressors 22 dem Brennstoffzellen-Stack 15 unter Druck zugeführt. Mittels eines weiteren Kompressors 23 mit zugehörigem Elektromotor 24 wird dem Brennstoffzellen-Stack zusätzlich unter Druck befeuchtete Luft zugeführt. Im Brennstoffzellen-Stack wird dann aus dem Wasserstoff und dem Sauerstoff elektrische Energie gewonnen, welche über den Stromsteller 14 zum Antrieb des Fahrzeugs 1 dem Elektrofahrmotor 13 zugeführt wird. Für den Betrieb des Brennstoffzellensystem können noch eine Vielzahl von weiteren Zusatzaggregaten, beispielsweise Ionentauscher 25, Luftfilter 26, Kondensatabscheider 27, Ausgleichsbehälter 28, Wasserpumpe 29, Reformatkühler 30, Reformer-Wärmetauscher 31, Wasserstoff-Zwischenspeicher 32, Brennstoffzellen-Kühler 33, Stromsteller 34 für elektrische Zusatzkomponenten oder Befeuchter 35 notwendig sein. Die Funktion dieser Zusatzaggregate wird als bekannt vorausgesetzt und daher nicht weiter beschrieben.

Um eine solche Vielzahl an Komponenten in einem Fahrzeug unterzubringen ist es vorteilhaft, wenn die Aggregate als separate Bauteile ausgeführt werden und somit auf die vorhandenen Einbauplätze verteilt werden können. Hierbei ist es besonders vorteilhaft, wenn wichtige oder besonders empfindliche Bauteile an einer geschützten Einbauposition angeordnet werden. Bei der beschriebenen Anordnung wird durch die geradlinig verlaufenden Längs- und Querträger 4-7 ein Art Sicherheitsraum ausgebildet. In diesem Sicherheitsraum werden vorzugsweise das Brennstoffzellen-Stack 15 und der Wasserstoffzwischenspeicher 32 angeordnet. Der Reformer 16 , einschließlich zugehöriger Zusatzaggregate, und der Brennstofftank 17 sind im hinteren Bereich des Fahrzeugs untergebracht. Der Brennstofftank 17 ist wiederum aus Sicherheitsgründen zwischen den beiden Längsträgern 4, 5 hinter der Hinterachse 9 angeordnet. Der Reformer 16 kann dann im Bereich der Hinterachse 9 oberhalb der Längsträger 4, 5 und des Brennstofftanks 17 vorgesehen werden. Der Brennstoffzellen-Kühler 33 wird in bekannter Weise im Frontbereich des Fahrzeugs 1 angeordnet, so daß eine ausreichende Versorgung mit Kühlluft gewährleistet ist. Direkt hinter dem Brennstoffzellen-Kühler 33 kann dann der Stromsteller 14 für den Elektrofahrmotor 13 vorgesehen werden.

Weitere Zusatzaggregate können auf den noch freien Bauraum im gesamten Fahrzeug 1, beispielsweise auch im mittleren Fahrzeugbereich zwischen den Längsträgern 4, 5 und dem seitlichen Rahmenabschluß, verteilt werden. Vorzugsweise können hierbei alle Teile des Antriebsaggregats, die im mittleren Fahrzeugbereich angeordnet sind, in Unterflurbauweise ausgeführt werden. Dadurch kann der Boden in der Fahrgastzelle ebenflächig ausgebildet werden. Lediglich im vorderen und hinteren Fahrzeugbereich können auch Zusatzaggregate oberhalb der Längsträger angeordnet werden. Dies führt lediglich dazu, daß sich im Heckbereich der Gepäckraumboden 41 auf einem höheren Niveau befindet.

Anstelle der gezeigten querliegenden Anordnung an der Vorderachse 8 kann der Elektrofahrmotor 13 selbstverständlich auch an der Hinterachse 9 oder in Längsrichtung angeordnet werden. Außerdem können zwei radnahe Elektrofahrmotoren 13 an der Vorder- oder Hinterachse 8, 9 vorgesehen werden.

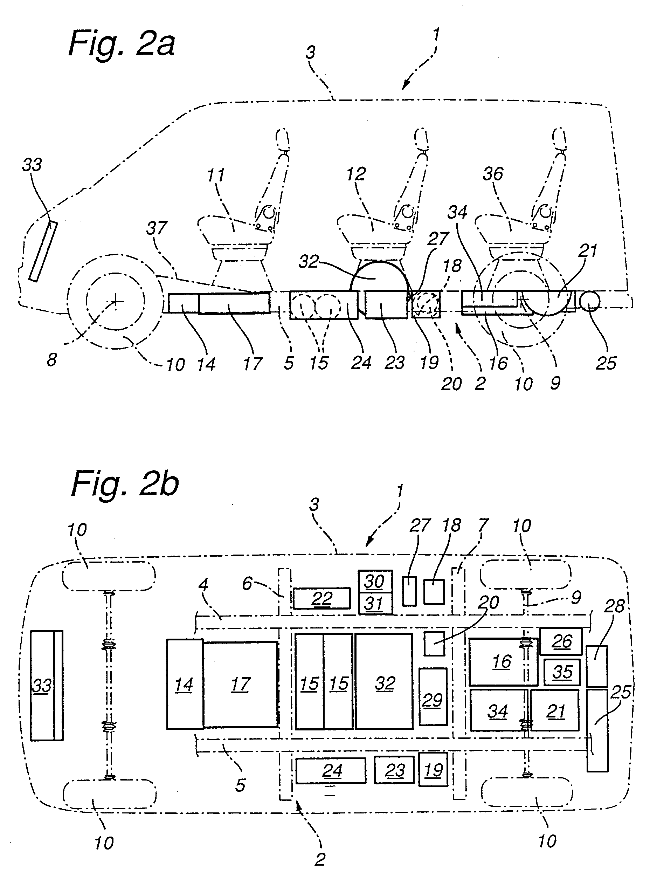

Fig. 2 zeigt eine ähnlich Anordnung für einen Minivan oder einen Transporter mit drei Sitzreihen 11, 12, 36. Hierbei sind gleiche Teile gegenüber Fig. 1 mit gleichen Bezugszeichen gekennzeichnet. Im Gegensatz zu Fig. 1 ist bei dieser Anordnung der Brennstofftank 17 im Bereich der Vordersitze 11 zwischen den Längsträgern 4, 5 angeordnet. Außerdem sind die Stromsteller 14, 34 nicht im Fahrzeugbug, sondern hinter der Vorderachse 8 und vor der Hinterachse 9, jeweils zwischen den Längsträgern 4, 5, vorgesehen. Bei dieser Anordnung ist zusätzlich auch der Reformer 16 und die im Fahrzeughinterteil gruppierten Zusatzaggregate im Unterflurbereich angeordnet, so daß hier der Boden der Fahrgastzelle 37 über den gesamten Bereich ebenflächig ausgebildet werden kann.

Bei den Unterfluranordnungen ist es möglich, die Antriebsaggregate in einer Wanne oder einem Hilfsrahmen zu montieren, wobei der Einbau von unten oder durch den Boden der Fahrgastzelle 37 erfolgen kann. Für die Montage beziehungsweise Wartung weist in diesem Fall der Boden der Fahrgastzelle 37 oder der Fahrzeugunterboden entsprechende Aussparungen oder Wartungsklappen auf.

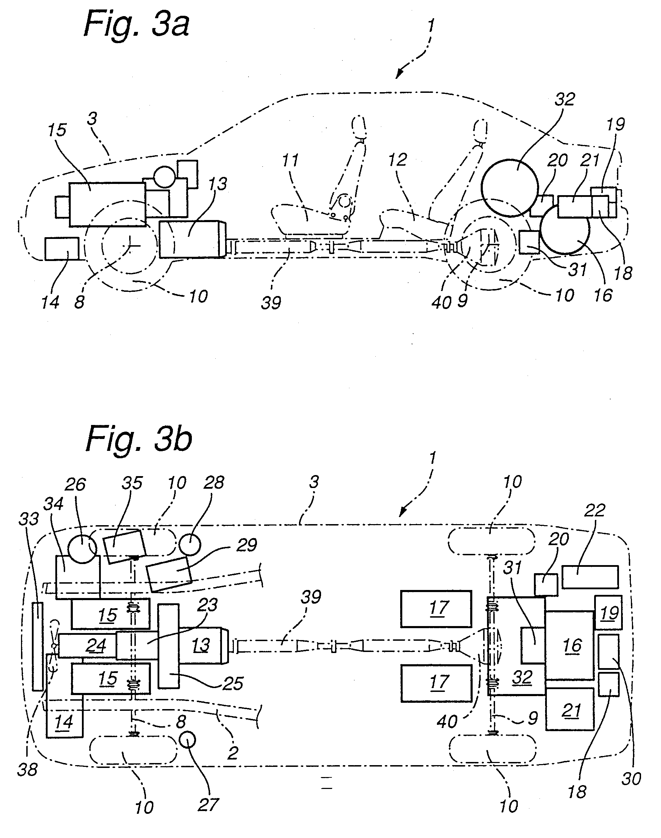

Fig. 3 zeigt eine Anordnung für ein konventionelles Mittelklassefahrzeug. Hierbei sind wiederum gleiche Teile gegenüber Fig. 1 und Fig. 2 mit gleichen Bezugszeichen gekennzeichnet. Bei dieser Anordnung steht im mittleren Fahrzeugbereich kein Platz für die Anordnung von Antriebsaggregaten zur Verfügung. Deshalb werden in diesem Fall die Komponenten auf den vorderen und den hinteren Fahrzeugbereich verteilt. Der Brennstofftank 17 ist in zwei Teile aufgeteilt und unter der hinteren Rücksitzbank 12 angeordnet. Zusätzlich wird der Wasserstoffzwischenspeicher 32 im hinteren Fahrzeugteil unmittelbar hinter der Rücksitzbank 12 angeordnet. Der Reformer 16 und zugeordnete Zusatzaggregate bleiben im unteren Bereich des hinteren Fahrzeugbereichs angeordnet.

Im vorderen Fahrzeugbereich sind der Brennstoffzellen-Kühler 33 und Stromstellereinheiten 14, 34 vorgesehen. Zusätzlich wird bei dieser Anordnung eine kompakte Einheit aus Brennstoffzellen-Stack 15 und Kompressor 23 mit zugehörigem Elektromotor 24 im Fahrzeugvorderteil eingebaut. Hierbei ist ein Kühlerlüfter 38 und der Kompressor 23 mit Elektromotor 24 auf einer gemeinsamen Welle, die entlang der Fahrzeuglängsachse verläuft, angeordnet. Auf dieser Welle können noch weitere Zusatzaggregate, beispielsweise die Wasserpumpe 29, montiert werden. Der Brennstoffzellen-Stack 15 ist auf zwei Teile aufgeteilt, die sich auf beiden Seiten des Kompressors 23 befinden. Dadurch kann ein kompaktes System mit kurzer Luftführung vom Luftfilter 26 über den Kompressor 23 zum Brennstoffzellen-Stack 15 realisiert werden. Die Aufteilung der Komponenten auf Vorder- und Hinterteil des Fahrzeugs 1 trägt außerdem zum Ausgleich der Gewichtsverteilung und damit zu einer günstigen Schwerpunktslage bei.

Der Elektrofahrmotor 13 ist in diesem Ausführungsbeispiel mit einem Festübersetzungsgetriebe oder einem Zweigang-Automatikgetriebe verblockt und ebenfalls entlang der Fahrzeuglängsachse angeordnet, wobei der Antrieb des Fahrzeugs mit Hilfe einer Kardanwelle 39 und eines Differentials 40 über die Hinterachse 9 erfolgt. Selbstverständlich sind aber bei allen gezeigten Anordnungen andere Antriebskonzepte, beispielsweise über zwei radnah an der Hinterachse 9 angeordnete Elektromotoren, möglich.

Bei einem Brennstoffzellensystem ohne Reformer 16 kann der oder die Brennstofftanks 17 auch im Bereich des Fahrzeugdaches oder im Gepäckraum angeordnet werden.

## Patentansprüche

1. Anordnung eines Antriebsaggregats in einem Fahrzeug, welches zumindest einen Elektrofahrmotor, eine Brennstoffzelle, einen Reformer und einen Brennstofftank aufweist,
**dadurch gekennzeichnet,**
daß der Reformer (16) und die Brennstoffzelle (15) als separate Bauteile ausgeführt sind, die in unterschiedlichen Fahrzeugbereichen angeordnet sind.

2. Fahrzeug nach Anspruch 1,
**dadurch gekennzeichnet,**
daß der Reformer (16) im Heck des Fahrzeugs (1) und die Brennstoffzelle (15) im Fahrzeugmittelteil angeordnet ist.

3. Fahrzeug nach Anspruch 2,
**dadurch gekennzeichnet,**
daß die Brennstoffzelle (15) und/oder der Reformer (16) im Unterflurbereich des Fahrzeugs (1) angeordnet ist.

4. Fahrzeug nach Anspruch 1,
**dadurch gekennzeichnet,**
daß der Reformer (16) im Heck des Fahrzeugs (1) und die Brennstoffzelle (15) im Fahrzeugvorderteil angeordnet ist

5. Fahrzeug nach Anspruch 1,
**dadurch gekennzeichnet,**
daß der Brennstofftank (17) im Heck, im Bereich der Rücksitzbank (12) oder im Bereich der Vordersitze (11) des Fahrzeugs (1) angeordnet ist.
